# EUROPÄISCHE PATENTSCHRIFT

(11) **EP 2 915 146 B1**
(45) Veröffentlichungstag und Bekanntmachung des Hinweises auf die Patenterteilung: **23.11.2022**
(21) Anmeldenummer: 13786646.3
(22) Anmeldetag: 29.10.2013
(51) Int. Cl.: G07D 7/1205, G07D 7/20, G07D 7/2033, G07D 7/202

(54) **VERFAHREN UND VORRICHTUNG ZUR PRÜFUNG EINES SICHERHEITSELEMENTS**
METHOD AND DEVICE FOR CHECKING A SECURITY ELEMENT
PROCÉDÉ ET DISPOSITIF DE VÉRIFICATION D'UN ÉLÉMENT DE SÉCURITÉ

(30) Priorität: 31.10.2012 DE 102012219905
(43) Veröffentlichungstag der Anmeldung: 09.09.2015
(73) Patentinhaber: Bundesdruckerei GmbH, 10969 Berlin (DE)
(72) Erfinder: FISCHER, Jörg, 13053 Berlin (DE); KULIKOVSKA, Olga, 14165 Berlin (DE); PAESCHKE, Manfred, 16348 Wandlitz (DE); STARICK, Detlef, 17491 Greifswald (DE)
(74) Vertreter: Patentanwälte Bressel und Partner mbB
(86) Internationale Anmeldenummer: PCT/EP2013/072563
(87) Internationale Veröffentlichungsnummer: WO 2014/067922

(56) Entgegenhaltungen:
- EP-A2- 1 244 073
- EP-B1- 1 631 461
- DE-A1- 10 304 805
- DE-A1-102008 034 021
- DE-A1-102008 034 022
- DE-A1-102008 047 636

## Beschreibung

Die Erfindung betrifft ein Verfahren und eine Vorrichtung zur Prüfung eines Sicherheitselements, insbesondere eines Sicherheitselements, welches in einem Sicherheitsdokument enthalten ist.

Die EP 1 631 461 B1 offenbart ein Wertdokument mit mindestens einem Sicherheitselement, das in einem Markierungsbereich eine auf einem Trägerkörper aufgebrachte, elektrolumineszierende Pigmente umfassende Markierungsschicht umfasst, wobei im Markierungsbereich verteilt eine Mehrzahl jeweils von ihrer Umgebung elektrisch isolierter Feldverdrängungselemente mit einer Dielektrizitätszahl von mehr als 50 angeordnet ist, die einen mittleren Abstand zueinander von etwa 5µm bis 500µm zur Bildung von Zwischenräumen für die elektrolumineszierenden Pigmente aufweisen, und die eine makroskopisch aufgeprägte elektrische Feldstärke lokal in den Zwischenräumen erhöhen.

Die EP 1 748 903 B1 offenbart ein maschinenlesbares Sicherheitselement für Sicherheitserzeugnisse, enthaltend mindestens eine partikelförmige Substanz mit elektrolumineszierenden Eigenschaften sowie ein transparentes elektrisch leitfähiges Pigment, wobei mindestens eine Schicht des Sicherheitselementes sowohl eine partikelförmige Substanz mit elektrolumineszierenden Eigenschaften als auch ein transparentes elektrisch leitfähiges Pigment enthält, wobei diese in statistischer Verteilung vorliegen.

Die DE 10 2008 047 636 A1 offenbart eine Vorrichtung zur Echtheitsüberprüfung eines Sicherheitsdokuments, das zumindest bei einer Anregungsfrequenz in einem Hochspannungs-Wechselfeld elektrolumineszierendes Sicherheitsmerkmal aufweist, mit einer Sensoreinheit, die ein Anregungsmodul, ein Kondensatorsystem und eine Detektoreinheit umfasst, wobei das Sicherheitsdokument durch die Sensoreinheit bewegt wird und das Lumineszenzlicht von dem Kondensatorsystem gesammelt und auf die Detektoreinheit gerichtet wird, die das Lumiszenzlicht erfasst und spektral auswertet, wobei das Anregungsmodul eine spaltförmige Öffnung aufweist, die einen Bewegungspfad des zu überprüfenden Sicherheitsdokuments mit ihren gegenüberliegenden Begrenzungsflächen übergreift.

Die EP 12 44 073 A2 offenbart ein Verfahren für die Echtheitserkennung von Wert- und/oder Sicherheitsdokumenten, wobei mindestens ein Sicherheitselement in oder auf das Wert- und/oder Sicherheitsdokument ein- und/oder aufgebracht ist, wobei das Sicherheitselement mit Strahlung einer fest voreingestellten Anregungswellenlänge angeregt wird und daraufhin Strahlung emittiert, wobei die emittierte Strahlung von einem Erfassungseinheit erfasst und von einer Auswerteeinheit ausgewertet wird, dadurch gekennzeichnet, dass das Intensitätsprofil der emittierten Strahlung in einem fest vorgegebenen Wellenlängenbereich über einem vorgegebenen Messzeitraum nach der Anregung erfasst und zur Echtheitserkennung analysiert wird.

Die DE 103 04 805 A1 offenbart ein Verfahren zur Herstellung von Sicherheitskennzeichen, wobei das Sicherheitskennzeichen ein Zufallsmuster, z.B. einer zufälligen Verteilung von Farbpartikeln, enthält, deren Koordinaten und Größen einen digitalen Fingerabdruck bilden.

Die DE 10 2008 034 021 A1 offenbart ein Verfahren zur Herstellung eines Sicherheits- und/oder Wertprodukts, insbesondere eines Sicherheits- und/oder Wertdokuments, wobei das Sicherheitsdokument ein Zufallsmuster aus Partikeln einer Lumineszenzsubstanz, z.B. eines Elektroluminophors, aufweist, und dieses Zufallsmuster einer Zeichenfolge zugeordnet wird.

Es stellt sich das technische Problem, ein Verfahren und eine Vorrichtung zur Prüfung eines Sicherheitselements, insbesondere eines Sicherheitsdokuments, welches mindestens einer partikelförmigen Substanz mit elektrolumineszierenden Eigenschaften und mindestens ein Feldverdrängungselement enthält, zu schaffen, welche eine möglichst einfach zu implementierende, jedoch zuverlässige Verifizierung des Sicherheitselements ermöglichen.

Die Lösung des technischen Problems ergibt sich durch die Gegenstände mit den Merkmalen der Ansprüche 1 und 8. Weitere bevorzugte Ausführungsformen ergeben sich aus den Unteransprüchen.

Vorgeschlagen wird ein Verfahren zur Prüfung eines Sicherheitselements eines Sicherheitsdokuments, wobei das Sicherheitselement mindestens eine partikelförmige Substanz mit elektrolumineszierenden Eigenschaften und mindestens ein Feldverdrängungselement enthält.

Es ist eine Grundidee der Erfindung, dass das Sicherheitselement verifiziert wird, wenn, nach externer Anregung der Elektrolumineszenz, eine Vielzahl von räumlich diskret verteilten Intensitätsmaxima in einem optischen Abbild des Sicherheitselements detektiert wird, wobei diese durch das Vorhandensein der partikelförmigen Substanz mit elektrolumineszierenden Eigenschaften und des mindestens ein Feldverdrängungselements bedingt werden.

Bei den Substanzen mit elektrolumineszierenden Eigenschaften handelt sich in der Regel um partikuläre Materialien, deren Grundgitter aus anorganische Verbindungen der Gruppe II und VI des Periodensystems, vorzugsweise aus ZnS bestehen und die mit Ionen solcher Metalle wie Cu, Mn oder Ag dotiert sowie mit Ionen der Elemente Cl, Br, I oder Al kodotiert sind. Allerdings ist die Verwendung elektolumineszierender Materialien nicht auf diese Verbindungsklasse beschränkt. Es können auch andere pulverförmige anorganische Leuchtstoffe oder auch partikuläre organische Polymere oder homogen verteilte organische lichtemittierende Materialien oder Gemische aus den vorgenannten Verbindungen eingesetzt werden, sofern sie unter den angewendeten Feldanregungsbedingungen eine detektierbare Elektrolumineszenz zeigen. Die verwendeten Substanzen emittieren nach Anregung in einem elektrischen Wechselfeld vor allem im sichtbaren Bereich der elektromagnetischen Strahlung, wobei allerdings auch eine Emission im ultravioletten oder infraroten Spektralbereich möglich ist.

Vorteilhafterweise liegen die Partikel in Form von mikroverkapselten Verbindungen vor. Als Materialien für die umhüllende Schicht sind insbesondere Polymere oder auch verschiedene Metalloxide gut geeignet. Diese schützen die elektrolumineszierenden Substanzen vor verschiedenen Umgebungseinflüssen, beispielsweise vor den wässrigen Komponenten der Druckfarbe, welche in der Langzeitwirkung eine Zersetzung der elektrolumineszierenden Substanzen bewirken können. Dadurch kann die Alterungsbeständigkeit der elektrolumineszierenden Substanzen erhöht werden. Gegebenenfalls üben die umhüllenden Schichten auch eine spezifische Filterwirkung auf, wodurch die Lichtemission der elektrolumineszierenden Partikel modifiziert werden kann.

Die Teilchengröße der Partikel ist so ausgewählt, dass sie für die drucktechnische Verarbeitung und insbesondere für den Tiefdruck geeignet sind. Hierfür kommen vorzugsweise mittlere Teilchengrößen im Bereich von etwa 0,2 bis etwa 100 µm, vorzugsweise von 1 bis 50 µm und besonders bevorzugt von 2 bis 30 µm in Betracht.

Um sicher zu stellen, dass keine Anregung der Lumineszenz im ultravioletten Spektralbereich erfolgt, können zusätzlich noch UV-Filterschichten auf der Oberfläche der elektrolumineszierenden Partikel aufgebracht sein.

Es ist auch möglich, die partikulären elektrolumineszierenden Substanzen mit anorganischen oder organischen Farbstoffen zu beschichten oder zu versetzen, was dazu führen kann, sich die Reflexions- bzw. Absorptionsbänder und die Emissionsspektren dieser Substanzen verschieben. Damit ist es möglich, die Palette der zurVerfügung stehenden Farbtönefürdie Lichtemission zu erweitern.

Die partikulären elektrolumineszierenden Substanzen werden einzeln oder im Gemisch aus zwei oder mehreren verschiedenen eingesetzt. Werden verschiedene Substanzen eingesetzt, ist es von Vorteil, wenn diese eine Strahlung von unterschiedlicher Farbigkeit emittieren.

Wie in der EP 1 631 461 B1 offenbart, sind, um die zur Anregung der Elektrolumineszenz der Pigmente erforderliche, makroskopisch aufzuprägende elektrische Feldstärke gering zu halten, im Bereich des Sicherheitselements elektrisch jeweils von ihrer Umgebung isolierte Feldverdrängungselemente vorgesehen, die das aufgeprägte elektrische Feld infolge ihrer geeignet hoch gewählten Dielektrizitätskonstanten und bedingt durch die damit bewirkte Feldverdrängung, insbesondere in dessen Längsrichtung, in dem Bereich ihrer Zwischenräume erhöhen. Durch diese lokale Felderhöhung werden auch bei vergleichsweise geringen makroskopisch aufgeprägten Feldstärken lokal in besagten Zwischenräumen die zur Anregung der Elektrolumineszenz erforderlichen Feldstärken erreicht, wobei die Feldverdrängungselemente insbesondere hinsichtlich der lateralen Größe der zwischen ihnen belassenen Zwischenräume für den angestrebten Verstärkungseffekt geeignet dimensioniert sind.

Eine besonders günstige Verstärkungswirkung des elektrischen Felds im lokalen Nahbereich der elektrolumineszierenden Pigmente ist erreichbar, indem die Feldverdrängungselemente vorteilhafterweise auch hinsichtlich ihrer mittleren Größe geeignet dimensioniert und insbesondere an die typischerweise vorherrschenden Korngrößen der elektrolumineszierenden Pigmente angepasst sind. Dazu weisen die Feldverdrängungselemente vorteilhafterweise eine laterale Größe von bis zu etwa 500µm, insbesondere eine Größe zwischen 2µm und 100µm auf.

Zur Sicherstellung der angestrebten Feldverdrängung können die Feldverdrängungselemente aus dielektrischem Material mit einer geeignet hoch gewählten Dielektrizitätszahl oder -konstanten gebildet sein. Eine besonders wirksame Feldkompression in die von ihnen belassenen Zwischenraume ist aber erreichbar, indem die Feldverdrängungselemente aus elektrisch leitfähigem Material gebildet sind, so dass sie elektrisch von ihrer Umgebung jeweils isolierte, so genannte "floatende" Elektroden ausbilden.

Für eine gezielte und an die eingesetzten Pigmente anpassbare Beeinflussung und Fokussierung des elektrischen Felds sind die Feldverdrängungselemente vorteilhafterweise drucktechnisch, also beispielsweise unter Nutzung eines üblichen Druckverfahrens, wie beispielsweise Tiefdrucktechnik oder Siebdrucktechnik, auf den Tragkörper aufgebracht. Selbst bei einer vergleichsweise statistischen Verteilung der elektrolumineszierenden Pigmente in der Markierungsschicht ist dabei ein flächige besonders gleichmäßiger Verstärkungseffekt erreichbar, indem die Feldverdrängungselemente in weiterer vorteilhafter Ausgestaltung in Form einer lateral regelmäßigen Struktur, vorzugsweise in der Art eines Punktgitters oder Rasters, in der Art einer periodischen Linienstruktur oder in der Art eines offenen Kreuzgitters, auf den Tragkörper aufgebracht sind. Bei derartigen, drucktechnisch aufgebrachten Feldverdrängungselemente beträgt ihre laterale Größe vorteilhafterweise etwa 10µm bis 500µm, in besonders vorteilhafter Ausgestaltung etwa 50µm bis 200µm.

In besonders vorteilhafter Ausgestaltung sind die Feldverdrängungselemente oder zumindest Teile davon in Form von mit einer Dielektrizitätszahl von mehr als etwa 50, vorzugsweise als elektrisch leitfähige Pigmente, zusätzlich zu den elektrolumineszierenden Pigmenten in eine das Sicherheitselement bildende Markierungsschicht eingelagert sind. Dabei ist insbesondere beim Aufbringen der Markierungsschicht bei geeigneter Wahl des Ausgangsprodukts, insbesondere bei inniger Mischung der elektrolumineszierenden Pigmente mit den Pigmenten mit hoher Dielektrizitätszahl im Ausgangsmaterial, die Aufbringung sowohl der im Sicherheitselemente eigentlich aktiven Partikel, nämlich der elektrolumineszierenden Pigmente, als auch der feldverstärkenden Partikel, nämlich der Pigmente mit hoher Dielektrizitätszahl, in lediglich einem einzigen Arbeitsgang und somit mit besonders gering gehaltenem Aufwand möglich.

Als Sicherheitsdokument wird jedes Dokument bezeichnet, das eine physikalische Entität ist, die gegen ein unautorisiertes Herstellen und/oder Verfälschen durch Sicherheitsmerkmale geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar. Beispiele für Sicherheitsdokumente, welche auch Wertdokumente umfassen, die einen Wert repräsentieren, umfassen beispielsweise Reisepässe, Personalausweise, Führerscheine, Identitätskarten, Zutrittskontrollausweise, Krankenkassenkarten, Banknoten, Postwertzeichen, Bankkarten, Kreditkarten, Smartcards, Tickets und Etiketten.

Das vorgeschlagene Verfahren umfassend die nachfolgend beschriebenen Verfahrensschritte.

In einem ersten Schritt wird das Sicherheitselement mit einem elektrischen Anregungsfeld beaufschlagt. Das elektrische Anregungsfeld kann eine vorbestimmte Frequenz aufweisen und dient zur Anregung der elektrolumineszierenden Pigmente, wodurch diese entsprechendes Luminszenzlicht oder -strahlung emittieren. Hierzu kann das Sicherheitselement bzw. das Sicherheitsdokument derart angeordnet werden, dass es dem elektrischen Anregungsfeld ausgesetzt ist.

In einem zweiten Schritt wird ein optisches Abbild zumindest eines Bereichs des Sicherheitselements nach oder während des Erzeugens des elektrischen Anregungsfelds erzeugt. Dies kann beispielsweise mittels einer Bilderfassungseinrichtung erfolgen. Diese kann beispielsweise als CCD-Kamera ausgebildet sein. Auch können der Bilderfassungseinrichtung weitere optische Elemente, z.B. Linsen und/oder Spiegel und/oder ein Beugungsgitter, zugeordnet sein, mittels derer das Abbild erzeugt werden kann. Das Abbild kann eine vorbestimmte Auflösung mit Bezug auf eine räumliche Größe des Sicherheitselements aufweisen. So kann das Abbild beispielsweise eine vorbestimmte Anzahl von Bildpunkten, die auch als Pixel bezeichnet werden können, aufweisen, die zeilen- und spaltenweise angeordnet sind. Somit kann das optische Abbild in einer Sensorebene der Bilderfassungseinrichtung mit einer vorbestimmten Auflösung erzeugt werden.

Erfindungsgemäß erfolgt in einem dritten Schritt eine bildbasierte Detektion von lokalen Intensitätsmaxima in dem optischen Abbild. Ein lokales Intensitätsmaximum kann hierbei Bildpunkte oder einen mehrere Bildpunkte umfassenden Bildbereich bezeichnen, dessen Intensitätswert(e) eine vorbestimmte Intensitätsbedingung erfüllen. Ein lokales Intensitätsmaximum kann beispielsweise durch einen Bildpunkt gebildet werden, wobei in einer vorbestimmten Bildpunktumgebung dieses Bildpunktes die Intensitäten keine größeren Werte als die Intensität dieses Bildpunkts annehmen. Auch kann die Intensität des Bildpunkts, der das lokale Intensitätsmaximum bildet, um eine vorbestimmten Prozentzahl, beispielsweise 10%, größer als die Intensitäten aller sich in einer vorbestimmten Umgebung befindlichen Bildpunkte sein. Selbstverständlich sind auch andere Kriterien zur Ermittlung lokaler Intensitätsmaxima vorstellbar. Ein Bildbereich, der ein lokales Intensitätsmaximum bildet, kann mehrere zusammenhängende Bildpunkte umfassen, die alle die vorhergehend genannten Bedingung erfüllen. Beispielsweise kann ein Bildbereich ein lokales Intensitätsmaximum bilden, wenn Intensitäten von zusammenhängenden Bildpunkten dieses Bildbereichs größer, beispielsweise um einen vorbestimmten Prozentsatz größer, sind als Intensitäten von Bildpunkten in einer vorbestimmten Umgebung um einen Bildpunkt des Bildbereichs mit einem maximalen Intensitätswert.

In einem vierten Schritt erfolgt eine Verifikation des Sicherheitselements, falls eine Anzahl an verschiedenen Bildpunktpositionen vorhandener lokaler Intensitätsmaxima größer oder gleich einer vorbestimmten Anzahl ist, wobei die Anzahl mindestens Zwei beträgt.

Hierbei ist zur Verifizierung ausschließlich die Anzahl von lokalen Intensitätsmaxima erforderlich. Somit ist keine explizite Bestimmung von absoluten Bildpunktkoordinaten erforderlich. Vielmehr ist ausschließlich eine Information darüber erforderlich, ob Bildpunkte, die lokale Intensitätsmaxima darstellen, an verschiedenen Bildpunktpositionen angeordnet sind. Hierfür genügt die Bestimmung einer Bildpunktkoordinantendifferenz. Die Anzahl erzeugter Intensitätsmaxima wird insbesondere von einer Anzahl von im Sicherheitselement enthaltenden elektrolumineszierenden Pigmenten abhängen. Daher kann auch geprüft werden, ob die detektierte Anzahl einer vorbekannten Anzahl entspricht oder größer als diese Anzahl ist oder in einem vorbekannten Bereich liegt, wobei die vorbekannten Anzahl oder der vorbekannte Bereich abhängig von der Anzahl der im Sicherheitselement enthaltenen elektrolumineszierenden Pigmente ist. Diese Anzahl kann beispielsweise in Abhängigkeit von einer räumlichen Größe des Sicherheitselements und einer räumlichen Konzentration von elektrolumineszierenden Pigmenten bestimmt werden.

Die Anzahl der detektierten lokalen Intensitätsmaxima kann hierbei von Messung zu Messung variieren, insbesondere auch in Abhängigkeit einer Intensität des Anregungsfelds.

Somit wird in vorteilhafter Weise eine einfache Bestimmung ermöglicht, ob ein Sicherheitselement überhaupt elektrolumineszierende Pigmente und Feldverdrängerelemente beinhaltet. Weiter wird eine einfache Bestimmung ermöglicht, ob das Sicherheitselement elektrolumineszierende Pigmente mit einer bestimmten Anzahl bzw. Konzentration beinhaltet.

Ein solches Verfahren kann in vorteilhafter Weise einfach implementiert werden. Insbesondere kann es in Banknotenprüfautomaten oder Bankautomaten, also dezentral, durchgeführt werden.

Weiter erfindungsgemäß wird ein räumlicher Abstand der lokalen Intensitätsmaxima untereinander oder zu einem Referenzelement bestimmt, wobei das Sicherheitselement verifiziert wird, falls vorbestimmte Abstandseigenschaften erfüllt sind. Der räumliche Abstand kann z.B. bildpunktbasiert bestimmt werden. Ist ein lokales Intensitätsmaximum ein Bereich von mehreren zusammenhängenden Bildpunkten, so kann ein Abstand mit Bezug zu einem geometrischen Zentrum des Bereichs bestimmt werden.

Beispielsweise kann für einen ersten Bildpunkt, der ein lokales Intensitätsmaximum bildet, ein minimaler oder ein maximaler Abstand zu einem weiteren Bildpunkt, der ebenfalls ein lokales Intensitätsmaximum bildet, bestimmt werden. Das Sicherheitselement wird erfindungsgemäß verifiziert, wenn alle oder ein vorbestimmter Anteil dieser Abstände kleiner als ein vorbestimmter Minimalabstand oder größer als ein vorbestimmter Maximalabstand sind.

Auch kann für alle Bildpunkte, die ein lokales Intensitätsmaximum bilden, ein Abstand zu einem Referenzpunkt oder zu einer Referenzlinie des Abbilds, bestimmt werden. Das Sicherheitselement kann verifiziert werden, wenn alle oder ein vorbestimmter Anteil dieser Abstände größer als ein vorbestimmter Minimalabstand oder kleiner als ein vorbestimmter Maximalabstand sind. Der Referenzpunkt kann beispielsweise der Bildpunkt in der linken oberen Ecke des Abbilds sein. Die Referenzlinie kann beispielsweise eine Randlinie des Abbilds sein.

Insbesondere kann auch eine statistische, beispielsweise histogrammbasierte, Auswertung der Abstände erfolgen, wobei das Sicherheitselement verifiziert wird, wenn vorbestimmte statistische Eigenschaften, beispielsweise eine vorbestimmte Verteilung und/oder ein vorbestimmter Mittelwert, erfüllt sind.

Auch die Abstände können von einer Anzahl bzw. einer Konzentration der im Sicherheitselement enthaltenen elektrolumineszierenden Pigmente abhängig sein. Daher kann auch geprüft werden, ob die Abstände vorbekannte Abstandseigenschaften erfüllen, wobei diese abhängig von der Anzahl bzw. der Konzentration der im Sicherheitselement enthaltenen elektrolumineszierenden Pigmente sind.

Alternativ oder kumulativ wird erfindungsgemäß eine räumliche Größe eines Bereichs der lokalen Intensitätsmaxima bestimmt, wobei das Sicherheitselement verifiziert wird, falls vorbestimmte Größeneigenschaften erfüllt sind. Eine Größe bezeichnet hierbei eine bildpunktbasierte Größe. Die Größe kann beispielsweise einer Anzahl von zusammenhängenden Bildpunkten eines Bildbereiches entsprechen, die ein lokales Intensitätsmaximum bilden. Auch kann die Größe als ein Durchmesser eines Bereiches bestimmt werden, der Bildpunkte enthält, die um einen Bildpunkt mit maximalem Intensitätswert angeordnet sind und deren Intensitätswerte größer als ein vorbestimmter Anteil, z.B. die Hälfte, des maximalen Intensitätswerts sind.

Das Sicherheitselement wird erfindungsgemäß verifiziert, wenn alle Größen größer als eine Minimalgröße und kleiner als eine Maximalgröße sind.

Insbesondere kann auch eine statistische, beispielsweise histogrammbasierte, Auswertung der Größen erfolgen, wobei das Sicherheitselement verifiziert wird, wenn vorbestimmte statistische Eigenschaften, beispielsweise eine vorbestimmte Verteilung und/oder ein vorbestimmter Mittelwert, erfüllt sind.

Auch die Größe kann von einer Anzahl bzw. einer Konzentration der im Sicherheitselement enthaltenen elektrolumineszierenden Pigmente sein. Daher kann auch geprüft werden, ob die Größen vorbekannte Größeneigenschaften erfüllen, wobei diese abhängig von der Anzahl bzw. der Konzentration der im Sicherheitselemente enthaltenen elektrolumineszierenden Pigmente ist.

Weiter alternativ oder kumulativ wird erfindungsgemäß mindestens eine lumineszenzspezifische Eigenschaft der zur Erzeugung des Abbilds erfassten Strahlung, die auch als Lumineszenzstrahlung bezeichnet werden kann, bestimmt, wobei das Sicherheitselement verifiziert wird, falls die lumineszenzspezifische Eigenschaft erfüllt ist. Die lumineszenzspezifische Eigenschaft ist eine vorbestimmte Frequenz eines zeitlichen Intensitätsverlaufs der Lumineszenzstrahlung und/oder ein Abklingverhalten der Maximalintensität der Lumineszenzstrahlung sein. Weiter beschrieben wird ein Farbort als lumineszenzspezifische Eigenschaft, wobei ein Farbort hierbei einen Spektralbereich der Lumineszenzstrahlung bezeichnet. Auch weitere lumineszenzbasierte Eigenschaften können ausgewertet werden.

Durch die Auswertung der vorhergehend angeführten weiteren Eigenschaften ergibt sich in vorteilhafter Weise eine zuverlässigere Verifizierung des Sicherheitselements.

In einer weiteren Ausführungsform wird ein Intensitätswert mindestens eines lokalen Intensitätsmaximums bestimmt, wobei das Sicherheitselement verifiziert wird, falls mindestens eine vorbestimmte Intensitätsbedingung erfüllt ist. Vorzugsweise werden die Intensitätswerte aller lokalen Intensitätsmaxima bestimmt, wobei das Sicherheitselement verifziert wird, wenn alle Intensitäten oder ein vorbestimmter Anteil der Intensitäten größer als die vorbestimmte Intensität ist.

Die vorbestimmte Intensität kann insbesondere abhängig von Eigenschaften der elektrolumineszierende Pigmenten und von Eigenschaften der Feldverdrängerelemente sowie einem vorbestimmten Mischungsverhältnis von den elektrolumineszierenden Pigmenten zu den Feldverdrängerelementen sein. Hierbei gilt die Regel, dass mit steigender Anzahl von Feldverdrängerelementen bei konstanter Anzahl von elektrolumineszierende Pigmenten ein Intensitätswert der lokalen Intensitätsmaxima ansteigt, da eine höhere Feldkonzentration und somit stärkere Anregung in den Zwischenräumen der Feldverdrängerelemente gegeben ist.

Somit kann in vorteilhafter Weise geprüft werden, ob das Sicherheitselement ein vorbestimmtes Mischungsverhältnis von elektrolumineszierenden Pigmenten zu Feldverdrängerelementen aufweist.

Insbesondere kann auch eine statistische, beispielsweise histogrammbasierte, Auswertung der Intensitätswerte erfolgen, wobei das Sicherheitselement verifiziert wird, wenn vorbestimmte statistische Eigenschaften, beispielsweise eine vorbestimmte Verteilung und/oder ein vorbestimmter Mittelwert der Intensitätswerte, erfüllt sind.

Auch die vorhergehend erläuterten Abstände und/oder die vorhergehend erläuterten Größen der lokalen Intensitätsmaxima können abhängig von dem Mischungsverhältnis von elektrolumineszierenden Pigmenten zu Feldverdrängerelementen sein. Somit kann geprüft werden, ob die Abstände und/oder Größen vorbestimmte Eigenschaften erfüllen, die ebenfalls von dem Mischungsverhältnis abhängen.

In einer weiteren Ausführungsform wird eine Gesamtintensität der bei der Erzeugung des Abbilds erfassten Strahlung bestimmt, wobei das Sicherheitselement verifiziert wird, falls die Gesamtintensität kleiner oder größer als ein vorbestimmter Intensitätswert ist oder in einem vorbestimmten Intensitätsintervall liegt.

Die Gesamtintensität kann auch bildbasiert bestimmt werden, insbesondere in Abhängigkeit der Intensitätswerte aller Bildpunkte. Die Gesamtintensität setzt sich auch aus den vorhergehend erläuterten Intensitätswerten der lokalen Intensitätsmaxima zusammen. Auch die Gesamtintensität kann von dem vorhergehend erwähnten Mischungsverhältnis abhängen, wobei insbesondere neben den Intensitätswerten der lokalen Intensitätsmaxima noch die verbleibende Intensität berücksichtigt wird. Dies wiederum erhöht in vorteilhafter Weise die Zuverlässigkeit der Verifikation.

Die Intensität kann hierbei die in einem vorbestimmten Spektralbereich der Lumineszenzstrahlung enthaltenen Intensität sein.

Die Prüfung, ob die Gesamtintensität einer vorbekannten Gesamtintensität entspricht, die vom Mischungsverhältnis von elektrolumineszierenden Pigmenten zu Feldverdrängerelementen abhängig ist, ist auch ohne die vorhergehend erläuterte Detektion von lokalen Intensitätsmaxima möglich. So ist ein Verfahren vorstellbar, welches folgenden Verfahrensschritte umfasst: Beaufschlagen des Sicherheitselements mit einem elektrischen Anregungsfeld, Erzeugen eines optischen Abbilds zumindest eines Bereichs des Sicherheitselements nach oder während des Erzeugens des elektrischen Anregungsfelds, Bestimmung einer Gesamtintensität des Abbilds, Verifikation des Sicherheitselements, falls die Gesamtintensität größer oder kleiner ist als eine vorbestimmte Intensität ist oder in einem vorbestimmten Intensitätsintervall liegt, die/der abhängig von einem Mischungsverhältnis von elektrolumineszierenden Pigmenten zu Feldverdrängerelementen ist.

In einer weiteren Ausführungsform wird zumindest ein erster Teilbereich des Sicherheitselements zusätzlich mit Weißlichtstrahlung unter einem ersten Einstrahlwinkel und mit Weißlichtstrahlung unter einem zweiten Einstrahlwinkel beleuchtet. Weiter wird vom ersten Teilbereich reflektierte Strahlung erfasst und Farbtöne der reflektierten Strahlung bestimmt. Das Sicherheitselement wird verifiziert, falls zwei wellenlängen- und winkelspezifische Farbtöne detektiert werden.

Alternativ wird zumindest ein erster Teilbereich des Sicherheitselements zusätzlich mit Weißlichtstrahlung unter einem ersten Einstrahwinkel und ein zweiter Teilbereich zusätzlich mit Weißlichtstrahlung unter einem zweiten Einstrahlwinkel beleuchtet. Der erste Teilbereich kann hierbei vom zweiten Teilbereich zumindest teilweise oder vollständig verschieden sein. Weiter wird vom ersten und vom zweiten Teilbereich reflektierte Strahlung erfasst und ein Farbton der vom ersten Teilbereich reflektierten Strahlung und ein Farbton der vom zweiten Teilbereich reflektierten Strahlung bestimmt. Das Sicherheitselement wird verifiziert, falls der Farbton der vom ersten Teilbereich reflektierten Strahlung einem durch den ersten Einstrahlwinkel spezifizierten Farbton entspricht und der Farbton der vom zweiten Teilbereich reflektierten Strahlung einem durch den zweiten Einstrahlwinkel spezifizierten Farbton entspricht.

In dieser Ausführungsform des Verfahrens sind die vorhergehend erläuterten Feldverdrängerelemente als, insbesondere plättchenförmige, Effektpigmente ausgebildet. Ein Effektpigment bezeichnet ein Pigment, welches unter verschiedenen Beleuchtungs- und/oder Betrachtungswinkeln einen unterschiedlichen visuell wahrnehmbaren Farb- und/oder Helligkeitseindruck hinterlässt. Bei unterschiedlichen Farbeindrücken wird diese Eigenschaft als Farbflop bezeichnet. Insbesondere Pigmente, die einen Farbflop aufweisen, erzeugen in den damit hergestellten Sicherheitselementen nicht kopierbare Farb- und Glanzeindrücke, welche mit dem bloßen Auge ohne Hilfsmittel gut wahrnehmbar sind. Solche Pigmente werden auch als optisch variabel bezeichnet.

Die optisch variablen Effektpigmente weisen bevorzugt unter mindestens zwei verschiedenen Beleuchtungs- oder Betrachtungswinkeln mindestens zwei und höchstens vier, vorzugsweise aber unter zwei verschiedenen Beleuchtungs- oder Betrachtungswinkeln zwei oder unter drei verschiedenen Beleuchtungs- oder Betrachtungswinkeln drei optisch klar unterscheidbare diskrete Farben auf. Vorzugsweise liegen jeweils nur die diskreten Farbtöne und keine Zwischenstufen vor, das heißt, ein klarer Wechsel von einer Farbe zu einer anderen Farbe ist beim Abkippen des Sicherheitselementes, welches die optisch variablen Pigmente enthält, erkennbar. Diese Eigenschaft erleichtert dem Betrachter einerseits das Erkennen des Sicherheitselementes als solches und erschwert gleichzeitig die Kopierbarkeit dieses Merkmales, da in den handelsüblichen Farbkopierern Farbflopeffekte nicht kopiert und reproduziert werden können.

Um ihre volle optische Wirkung entfalten zu können, ist es von Vorteil, wenn die erfindungsgemäß eingesetzten Effektpigmente im sie enthaltenden Sicherheitselement in orientierter Form vorliegen, d.h. sie sind nahezu parallel zu den mit dem Sicherheitselement versehenen Oberflächen des Sicherheitserzeugnisses ausgerichtet. Eine solche Ausrichtung erfolgt in der Regel bereits im Wesentlichen mittels der üblichen angewandten Verfahren zur Aufbringung des Sicherheitselementes, wie beispielsweise üblichen Druckverfahren.

Als plättchenförmige Effektpigmente können beispielsweise die im Handel erhältlichen Interferenzpigmente, welche unter den Bezeichnungen Iriodin^{®}, Colorstream^{®}, Xirallic^{®}, Lustrepak^{®}, Colorcrypt^{®}, Colorcode^{®} und Securalic^{®} von der Firma Merck KGaA angeboten werden, Mearlin^{®} der Firma Mearl, Metalleffektpigmente der Firma Eckhard sowie goniochromatische (optisch variable) Effektpigmente wie beispielsweise Variochrom^{®} der Firma BASF, Chromafflair^{®} der Firma Flex Products Inc., Helicone^{®} der Firma Wacker oder holographische Pigmente der Firma Spectratec sowie andere gleichartige kommerziell erhältliche Pigmente eingesetzt werden. Diese Aufzählung ist jedoch lediglich als beispielhaft und nicht als beschränkend anzusehen.

Hierbei ist vorbekannt, unter welchem Einstrahlwinkel bei Weißlichteinstrahlung welche Farbtöne von den als Feldverdrängerelemente ausgeführten Effektpigmenten reflektiert werden. In diesem Fall enthält das Weißlicht auch einen Anteil an Strahlung mit der Wellenlänge, die unter dem Einstrahlwinkel von den Feldverdrängerelementen reflektiert wird. Sind also die Feldverdrängerelemente als Effektpigmente ausgeführt oder enthält das Sicherheitsmerkmal solche Effektpigmente, so kann in vorteilhafter Weise eine Zuverlässigkeit der Verifikation erhöht werden.

In einer weiteren Ausführungsform wird zumindest ein erster Teilbereich des Sicherheitselements zusätzlich mit einer ersten Strahlung unter einem ersten Einstrahlwinkel und mit einer weiteren Strahlung unter einem zweiten Einstrahlwinkel beleuchtet, wobei die erste Strahlung eine erste Wellenlänge oder einen ersten Spektralbereich aufweist, wobei die weitere Strahlung eine weitere Wellenlänge oder einen weiteren Spektralbereich aufweist. Die erste Wellenlänge bzw. der erste Spektralbereich ist hierbei verschieden von der zweiten Wellenlänge bzw. dem zweiten Spektralbereich.

Weiter wird vom ersten Teilbereich reflektierte Strahlung erfasst und Intensitäten der reflektierten Strahlung bestimmt. Das Sicherheitselement wird verifiziert, falls eine Intensität größer als eine vorbestimmte Intensität ist.

Der erste Spektralbereich ist ein vorbestimmter Spektralbereich, der nicht dem Spektralbereich von Weißlicht entspricht und die erste Wellenlänge beinhaltet. Der zweite Spektralbereich ist ein vorbestimmter Spektralbereich, der nicht dem Spektralbereich von Weißlicht entspricht und die zweite Wellenlänge beinhaltet. Die erste Wellenlänge und der erste Einstrahlwinkel sind hierbei auf einen dem Effektpigment zugeordneten, vorbekannten Einstrahlwinkel sowie vorbekannte Wellenlänge abgestimmt.

So wird eine Intensität, die größer ist als Null oder ein vorbestimmter Wert ist, ausschließlich dann detektiert, wenn der Einstrahlwinkel und die Wellenlänge zu den Eigenschaften des Effektpigments korrespondieren. Andernfalls wird eine Intensität detektiert, die Null oder kleiner als der vorbestimmte Intensitätswert ist.

Somit kann in vorteilhafter Weise das Vorhandensein eines bestimmten Effektpigments im Sicherheitselement überprüft werden, insbesondere auch dann, wenn dies als Feldverdrängerelement ausgeführt ist. Dies steigert in vorteilhafter Weise die Zuverlässigkeit der Verifikation.

Alternativ wird zumindest ein erster Teilbereich des Sicherheitselements zusätzlich mit einer ersten Strahlung unter einem ersten Einstrahwinkel und ein zweiter Teilbereich zusätzlich mit einer weiteren Strahlung unter einem zweiten Einstrahlwinkel beleuchtet. Weiter wird vom ersten und vom zweiten Teilbereich reflektierte Strahlung erfasst, wobei eine Intensität der vom ersten Teilbereich reflektierten Strahlung und eine Intensität der vom zweiten Teilbereich reflektierten Strahlung bestimmt wird, wobei das Sicherheitselement verifiziert wird, falls die Intensität der vom ersten Teilbereich reflektierten Strahlung größer als eine vorbestimmte Intensität ist und die Intensität der vom zweiten Teilbereich reflektierten Strahlung größer als eine vorbestimmte Intensität ist.

Auch hierdurch kann in vorteilhafter Weise das Vorhandensein eines bestimmten Effektpigments im Sicherheitselement überprüft werden, insbesondere auch dann, wenn dies als Feldverdrängerelement ausgeführt ist. Dies steigert in vorteilhafter Weise die Zuverlässigkeit der Verifikation.

So kann z.B. der erste Teilbereich durch eine erste Lichtquelle, die, insbesondere ausschließlich, Strahlung mit der ersten Wellenlänge erzeugt, und der erste oder der zweite Teilbereich durch eine zweite Lichtquelle, die Strahlung, insbesondere ausschließlich, mit der zweiten Wellenlänge erzeugt, beleuchtet werden. Alternativ kann der erste und der zweite Teilbereich durch eine Lichtquelle beleuchtet werden, die divergentes, weißes Licht erzeugt.

In einer weiteren Ausführungsform erfolgt die Beleuchtung mit der Weißlichtstrahlung oder mit der Strahlung einer ersten Wellenlänge sowie der Strahlung einer zweiten Wellenlänge zeitversetzt zu einer Beaufschlagung mit dem elektrischen Anregungsfeld. Insbesondere kann die Beaufschlagung mit dem elektrischen Anregungsfeld und die Beleuchtung zeitlich alternierend erfolgen. In einem ersten Zeitabschnitt wird somit das Sicherheitselement mit dem elektrischen Anregungsfeld beaufschlagt und die dadurch entstehende Lumineszenzstrahlung ausgewertet. In einem dem ersten Zeitabschnitt nachfolgenden Zeitabschnitt erfolgt dann die Beleuchtung und die Auswertung der Farbtöne bzw. Intensitäten. Somit wird in vorteilhafter Weise ein störender Einfluss der Beleuchtung auf die Auswertung der Lumineszenzstrahlung, insbesondere die Detektion der lokalen Intensitätsmaxima, minimiert.

Die Aktivierungsfrequenz der Beleuchtung kann hierbei abhängig von, insbesondere gleich der, Frequenz des elektrischen Anregungsfelds sein. Sind die Frequenzen gleich, so können die entsprechenden Signale einen Phasenversatz von 180° zueinander aufweisen.

Dies erhöht in vorteilhafter Weise eine Robustheit des vorgeschlagenen Verfahrens.

In einer weiteren Ausführungsform erfolgt die Beleuchtung mit der Weißlichtstrahlung oder mit der Strahlung der ersten Wellenlänge und der zweiten Wellenlänge, falls eine Spannung des elektrischen Anregungsfeldes kleiner als ein vorbestimmter Wert ist. Hierdurch ergibt sich in vorteilhafter Weise, dass die Beleuchtung ausschließlich dann erfolgt, wenn keine elektrische Anregung der Lumineszenz erfolgt. Auch hierdurch kann ein Einfluss der Beleuchtung auf die Auswertung der Lumineszenzstrahlung bzw. des optischen Abbilds minimiert werden.

Dies erhöht in vorteilhafter Weise eine Robustheit des vorgeschlagenen Verfahrens.

Weiter vorgeschlagen wird eine Vorrichtung zur Prüfung eines Sicherheitselements eines Sicherheitsdokuments, wobei die Vorrichtung mindestens eine Einrichtung zur Erzeugung eines elektrischen Anregungsfelds, mindestens eine Einrichtung zur Bilderfassung und mindestens eine Auswerteeinrichtung umfasst.

Mittels der Einrichtung zur Erzeugung eines elektrischen Anregungsfelds ist ein elektrisches Anregungsfeld erzeugbar, mit dem das Sicherheitselement beaufschlagt wird. Mittels der Einrichtung zur Bilderfassung ist ein optisches Abbild zumindest eines Bereichs des Sicherheitselements nach oder während des Erzeugens des elektrischen Anregungsfelds erzeugbar.

Weiter sind mittels der Auswerteeinrichtung lokale Intensitätsmaxima in dem Abbild detektierbar, wobei mittels der Auswerteeinrichtung das Sicherheitselement verifizierbar ist, falls eine Anzahl an verschiedenen Bildpositionen vorhandener lokaler Intensitätsmaxima größer oder gleich einer vorbestimmten Anzahl ist, wobei die Anzahl mindestens Zwei beträgt.

Weiter ist ein räumlicher Abstand der lokalen Intensitätsmaxima bestimmbar ist, wobei das Sicherheitselement verifizierbar ist, falls vorbestimmte Abstandseigenschaften erfüllt sind. Alternativ oder kumulativ ist eine räumliche Größe eines Bereichs der lokalen Intensitätsmaxima bestimmbar, wobei das Sicherheitselement verifizierbar ist, falls vorbestimmte Größeneigenschaften erfüllt sind. Alternativ oder kumulativ ist mindestens eine lumineszenzspezifische Eigenschaft der zur Erzeugung des Abbilds erfassten Lumineszenztrahlung bestimmbar, wobei das Sicherheitselement verifizierbar ist, falls die luminszenzspezifische Eigenschaft erfüllt ist.

Mittels der vorgeschlagenen Vorrichtung kann in vorteilhafter Weise eines der vorhergehend erläuterten Verfahren durchgeführt werden.

Die Vorrichtung kann weiter optische Mittel zur Strahllenkung und/oder -formung, beispielsweise eine Linse und/oder Spiegel und/oder ein Prisma und/oder ein Beugungsgitter, umfassen, die zur Erzeugung des optischen Abbilds dienen. Die Einrichtung zur Bilderfassung sowie gegebenenfalls die optischen Mittel sind hierbei derart ausgebildet und/oder angeordnet, dass das Sicherheitselement mit einer vorbestimmten Auflösung abgebildet werden kann. Die Auflösung kann hierbei z.B. abhängig von einer räumlichen Größe eines elektrolumineszierenden Pigments gewählt werden. Insbesondere kann die Auflösung des optischen Abbilds derart gewählt werden, dass in einen Bildpunkt ein elektrolumineszierendes Pigment, welches eine vorbestimmte räumliche Größe aufweist, abgebildet wird.

In einer weiteren Ausführungsform umfasst die Vorrichtung zusätzlich mindestens eine erste Lichtquelle, wobei die erste Lichtquelle derart angeordnet und ausgebildet ist, dass ein erster Teilbereich mit Strahlung unter einem ersten Einstrahlwinkel beleuchtbar ist und ein zweiter Teilbereich mit Strahlung unter einem zweiten Einstrahlwinkel beleuchtbar ist. Die erste Lichtquelle kann hierbei eine Weißlichtquelle oder eine Lichtquelle, die ausschließlich Strahlung mit der ersten Wellenlänge oder mit einem Spektralbereich, der die erste Wellenlänge umfasst, erzeugt, sein.

Alternativ umfasst die Vorrichtung zusätzlich mindestens eine zweite Lichtquelle, wobei die zweite Lichtquelle derart angeordnet und ausgebildet ist, dass der erste Teilbereich oder der zweite Teilbereich mit Strahlung unter dem zweiten Einstrahlwinkel beleuchtbar ist. Die zweite Lichtquelle kann hierbei eine Weißlichtquelle oder eine Lichtquelle, die ausschließlich Strahlung mit der zweiten Wellenlänge oder mit einem Spektralbereich, der die zweite Wellenlänge umfasst, erzeugt, sein.

Die Lichtquelle(n) kann/können hierbei derart signaltechnisch mit der Einrichtung zur Erzeugung des elektrischen Anregungsfelds verbunden sein, dass die Lichtquelle(n) zeitversetzt zum elektrischen Anregungsfeld aktivierbar ist/sind.

Die Erfindung wird anhand eines Ausführungsbeispiels näher erläutert. Die Figuren zeigen:
- Fig. 1: eine schematische Übersicht über eine erfindungsgemäße Vorrichtung,
- Fig. 2: ein exemplarischer Signalverlauf eines elektrischen Anregungsfeldes und einer Beleuchtung und
- Fig. 3: eine schematisches optisches Abbild des Sicherheitselements.

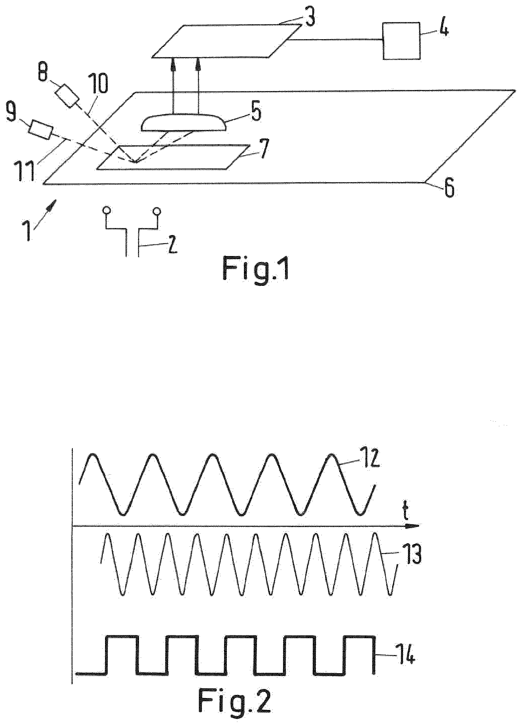

In Fig. 1 ist eine schematische Übersicht über eine erfindungsgemäße Vorrichtung 1 dargestellt. Die Vorrichtung 1 umfasst eine Elektrode 2 zur Erzeugung eines elektrischen Wechselfeldes, welches als Anregungsfeld dient. Weiter umfasst die Vorrichtung 1 eine Bilderfassungseinrichtung, wobei diese durch einen CCD-Chip 3 dargestellt ist. Weiter umfasst die Vorrichtung 1 eine Auswerteeinrichtung 4, die signaltechnisch mit dem CCD-Chip 3 verbunden ist. Weiter umfasst die Vorrichtung 1 eine Linse 5, die z.B. als Fresnel-Linse ausgebildet sein kann. Ein Sicherheitsdokument 6 weist einen streifenförmigen Abschnitt 7 auf, der ein Sicherheitselement ausbildet. Das Sicherheitselement beinhaltet mindestens eine partikelförmige Substanz mit elektrolumineszierenden Eigenschaften und mindestens ein Feldverdrängungselement in einem vorbestimmten Mischungsverhältnis. Die Feldverdrängungselemente sind hierbei als optische variable Effektpigmente ausgebildet.

Mittels der Elektrode 2 wird ein elektrisches Wechselfeld mit einer vorbestimmten Amplitude und Frequenz erzeugt. Dieses Anregungsfeld wechselwirkt mit den elektrolumineszenten Pigmenten und erzeugt eine Lumineszenzstrahlung. Diese Strahlung wird mittels der Linse 5 auf den CCD-Chip 3 mit einer vorbestimmten Auflösung abgebildet. Die Auswerteeinrichtung 4 detektiert dann bildpunktbasiert lokale Intensitätsmaxima in dem optischen Abbild und bestimmt, insbesondere ausschließlich, die Anzahl dieser lokalen Intensitätsmaxima. Ist diese Anzahl der an verschiedenen Bildpunktpositionen vorhandenen lokalen Intensitätsmaxima größer oder gleich einer vorbestimmten Anzahl, wobei die Anzahl mindestens Zwei beträgt, so kann das Sicherheitselement verifiziert werden.

Weiter umfasst die Vorrichtung 1 eine erste Weißlichtquelle 8 und eine zweite Weißlichtquelle 9. Die erste Weißlichtquelle 8 ist hierbei derart relativ zum Abschnitt 7 angeordnet, dass mittels der ersten Weißlichtquelle 8 Weißlicht 10 mit einem vorbestimmten ersten Einstrahlwinkel auf den Abschnitt 7 gestrahlt wird. Das vom Abschnitt 7 reflektierte Licht wird ebenfalls mittels der Linse 5 auf den CCD-Chip 3 abgebildet. Die Auswerteeinrichtung 4 kann dann einen Farbton des reflektierten Lichts bestimmen. Die zweite Weißlichtquelle 9 ist entsprechend derart relativ zum Abschnitt 7 angeordnet, dass mittels der zweiten Weißlichtquelle 9 Weißlicht 11 mit einem vorbestimmten zweiten Einstrahlwinkel auf den Abschnitt 7 gestrahlt wird, wobei der erste Einstrahlwinkel von dem zweiten Einstrahlwinkel verschieden ist. Das vom Abschnitt 7 reflektierte Licht wird ebenfalls mittels der Linse 5 auf den CCD-Chip 3 abgebildet. Die Auswerteeinrichtung 4 kann dann einen Farbton bzw. eine Spektralfrequenz des reflektierten Lichts bestimmen.

Werden vorbestimmte Farbtöne, die durch die Eigenschaften des optisch variablen Pigments und die Einstrahlwinkel festgelegt sind, detektiert, so kann das Sicherheitselement verifiziert werden.

Fig. 2 zeigt einen exemplarischen Signalverlauf eines elektrischen Anregungsfeldes und einer Beleuchtung über der Zeit t. Ein Spannungsverlauf 12 des elektrischen Anregungsfelds weist eine vorbestimmte Frequenz und eine vorbestimmte Amplitude auf. Ebenfalls dargestellt ist ein Intensitätsverlauf 13 einer durch das Anregungsfeld bedingten Lumineszenzstrahlung. Diese weist ebenfalls eine von den Eigenschaften der elektrolumineszenten Partikel, der Frequenz und der Intensität des Anregungsfelds und dem Mischungsverhältnis von elektrolumineszenten Partikeln zu Feldverdrängerelementen abhängige Intensität auf. Ein Spektralbereich der Luminszenzstrahlung ist abhängig von Eigenschaften der elektrolumineszenten Partikel und einer Frequenz des elektrischen Anregungsfeldes.

Weiter dargestellt ist ein zeitlicher Verlauf 14 eines Aktivierungssignals für die in Fig. 1 dargestellte erste Weißlichtquelle 8 und/oder die zweite Weißlichtquelle 9. Die Weißlichtquellen 8, 9 werden nur aktiviert und strahlen somit nur dann Weißlicht 10, 11 auf den Abschnitt 7, wenn die Spannung des elektrischen Anregungsfeldes kleiner oder größer als ein vorbestimmter Schwellwert ist. Hierdurch kann eine störende Beeinflussung der Abbildung der Lumineszenzstrahlung auf den CCD-Chip 3 (siehe Fig. 1) durch das Weißlicht 10, 11 vermieden werden.

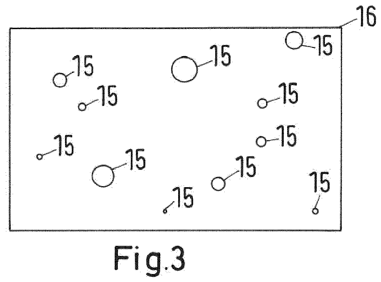

In Fig. 3 ist ein schematisches optisches Abbild 16 des in Fig. 3 dargestellten streifenförmigen Abschnitts 7 dargestellt. Hierbei weist das optische Abbild 16 eine Vielzahl von lokalen Intensitätsmaxima 15 auf. Die lokalen Intensitätsmaxima 15 sind hierbei räumlich verteilt und weisen verschiedene Größen auf. Neben der Anzahl von lokalen Intensitätsmaxima 15 kann auch eine räumliche Verteilung, insbesondere Abstände der lokalen Intensitätsmaxima 15 untereinander, und die Größe der lokalen Intensitätsmaxima 15 zur Verifikation des Sicherheitselements ausgewertet werden.

## Patentansprüche

1. Verfahren zur Prüfung eines Sicherheitselements eines Sicherheitsdokuments (6), wobei das Sicherheitselement mindestens eine partikelförmige Substanz mit elektrolumineszierenden Eigenschaften und mindestens ein Feldverdrängungselement enthält, umfassend die folgenden Verfahrensschritte:
- Beaufschlagen des Sicherheitselements mit einem elektrischen Anregungsfeld,
- Erzeugen eines optischen Abbilds (16) zumindest eines Bereichs des Sicherheitselements nach oder während des Erzeugens des elektrischen Anregungsfelds,
**gekennzeichnet durch** die Verfahrensschritte:
- Detektion von lokalen Intensitätsmaxima (15) in dem optischen Abbild (16),
- Verifikation des Sicherheitselements, falls eine Anzahl an verschiedenen Bildpositionen vorhandener lokaler Intensitätsmaxima (15) größer oder gleich einer vorbestimmten Anzahl ist, wobei die Anzahl mindestens Zwei beträgt,
wobei
a. ein räumlicher Abstand der lokalen Intensitätsmaxima (15) untereinander oder zu einem Referenzelement bestimmt wird, wobei das Sicherheitselement verifiziert wird, falls alle oder ein vorbestimmter Anteil der Abstände kleiner als ein vorbestimmter Minimalabstand oder größer als ein vorbestimmter Maximalabstand sind und/oder
*b.* eine räumliche Größe der lokalen Intensitätsmaxima (15) bestimmt wird, wobei die Größe einer Anzahl von zusammenhängenden Bildpunkten, die das lokale Intensitätsmaximum (15) bilden, entspricht, wobei das Sicherheitselement verifiziert wird, wenn alle Größen größer als eine Minimalgröße und kleiner als eine Maximalgröße sind und/oder
c. mindestens eine lumineszenzspezifische Eigenschaft der zur Erzeugung des Abbilds erfassten Lumineszenzstrahlung bestimmt wird, wobei das Sicherheitselement verifiziert wird, falls die luminszenzspezifische Eigenschaft erfüllt ist, wobei die lumineszenzspezifische Eigenschaft eine Frequenz eines zeitlichen Intensitätsverlaufs der Lumineszenzstrahlung oder ein Abklingverhalten der Maximalintensität der Lumineszenzstrahlung ist.

2. Verfahren nach Anspruch 1, **dadurch gekennzeichnet, dass** ein Intensitätswert mindestens eines lokalen Intensitätsmaximums (15) bestimmt wird, wobei das Sicherheitselement verifiziert wird, falls mindestens eine vorbestimmte Intensitätsbedingung erfüllt ist.

3. Verfahren nach einem der Ansprüche 1 oder 2, **dadurch gekennzeichnet, dass** eine Gesamtintensität der bei der Erzeugung des optischen Abbilds (16) erfassten Strahlung bestimmt wird, wobei das Sicherheitselement verifiziert wird, falls die Gesamtintensität kleiner oder größer als ein vorbestimmter Intensitätswert ist oder in einem vorbestimmten Intensitätsintervall liegt.

4. Verfahren nach einem der Ansprüche 1 bis 3, **dadurch gekennzeichnet, dass** zumindest ein erster Teilbereich des Sicherheitselements zusätzlich mit Weißlichtstrahlung unter einem ersten Einstrahlwinkel und mit Weißlichtstrahlung unter einem zweiten Einstrahlwinkel beleuchtet wird, wobei vom ersten Teilbereich reflektierte Strahlung erfasst wird, wobei Farbtöne der reflektierten Strahlung bestimmt werden, wobei das Sicherheitselement verifiziert wird, falls zwei wellenlängen- und winkelspezifische Farbtöne detektiert werden, oder dass zumindest ein erster Teilbereich des Sicherheitselements zusätzlich mit Weißlichtstrahlung unter einem ersten Einstrahwinkel und ein zweiter Teilbereich zusätzlich mit Weißlichtstrahlung unter einem zweiten Einstrahlwinkel beleuchtet wird, wobei vom ersten und vom zweiten Teilbereich reflektierte Strahlung erfasst wird, wobei ein Farbton der vom ersten Teilbereich reflektierten Strahlung und ein Farbton der vom zweiten Teilbereich reflektierten Strahlung bestimmt wird, wobei das Sicherheitselement verifiziert wird, falls der Farbton der vom ersten Teilbereich reflektierten Strahlung einem durch die erste Wellenlänge und den ersten Einstrahlwinkel spezifizierten Farbton entspricht und der Farbton der vom zweiten Teilbereich reflektierten Strahlung einem durch die zweite Wellenlänge und den zweiten Einstrahlwinkel spezifizierten Farbton entspricht.

5. Verfahren nach einem der Ansprüche 1 bis 3, **dadurch gekennzeichnet, dass** zumindest ein erster Teilbereich des Sicherheitselements zusätzlich mit einer ersten Strahlung unter einem ersten Einstrahlwinkel und mit einer weiteren Strahlung unter einem zweiten Einstrahlwinkel beleuchtet wird, wobei die erste Strahlung eine erste Wellenlänge oder einen ersten Spektralbereich aufweist, wobei die weitere Strahlung eine weitere Wellenlänge oder einen weiteren Spektralbereich aufweist, wobei vom ersten Teilbereich reflektierte Strahlung erfasst wird, wobei Intensitäten der reflektierten Strahlung bestimmt werden, wobei das Sicherheitselement verifiziert wird, falls eine Intensität größer als eine vorbestimmte Intensität ist, oder dass zumindest ein erster Teilbereich des Sicherheitselements zusätzlich mit einer ersten Strahlung unter einem ersten Einstrahwinkel und ein zweiter Teilbereich zusätzlich mit einer weiteren Strahlung unter einem zweiten Einstrahlwinkel beleuchtet wird, wobei vom ersten und vom zweiten Teilbereich reflektierte Strahlung erfasst wird, wobei eine Intensität der vom ersten Teilbereich reflektierten Strahlung und eine Intensität der vom zweiten Teilbereich reflektierten Strahlung bestimmt wird, wobei das Sicherheitselement verifiziert wird, falls die Intensität der vom ersten Teilbereich reflektierten Strahlung größer als eine vorbestimmte Intensität ist und die Intensität der vom zweiten Teilbereich reflektierten Strahlung größer als eine vorbestimmte Intensität ist.

6. Verfahren nach einem der Ansprüche 4 oder 5, **dadurch gekennzeichnet, dass** die Beleuchtung mit der Weißlichtstrahlung oder der Strahlung einer ersten Wellenlänge und der Strahlung einer zweiten Wellenlänge zeitversetzt zu einer Beaufschlagung mit dem elektrischen Anregungsfeld erfolgt.

7. Verfahren nach Anspruch 6, **dadurch gekennzeichnet, dass** die Beleuchtung mit der Weißlichtstrahlung oder der Strahlung einer ersten Wellenlänge und einer zweiten Wellenlänge erfolgt, falls eine Spannung des elektrischen Anregungsfeldes kleiner als ein vorbestimmter Schwellwert ist.

8. Vorrichtung zur Prüfung eines Sicherheitselements eines Sicherheitsdokuments (6), wobei die Vorrichtung (1) eingerichtet ist, ein Verfahren nach einem der vorangehenden Ansprüche auszuführen und mindestens eine Einrichtung zur Erzeugung eines elektrischen Anregungsfelds, mindestens eine Einrichtung zur Bilderfassung und mindestens eine Auswerteeinrichtung (4) umfasst,
wobei mittels der Einrichtung zur Erzeugung eines elektrischen Anregungsfelds ein elektrisches Anregungsfeld erzeugbar ist, mit dem das Sicherheitselement beaufschlagt wird, wobei mittels der Einrichtung zur Bilderfassung ein optisches Abbild (16) zumindest eines Bereichs des Sicherheitselements nach oder während des Erzeugens des elektrischen Anregungsfelds erzeugbar ist,
**dadurch gekennzeichnet, dass**
mittels der Auswerteeinrichtung (4) lokale Intensitätsmaxima (15) in dem optischen Abbild (16) detektierbar sind, wobei mittels der Auswerteeinrichtung (4) das Sicherheitselement verifizierbar ist, falls eine Anzahl an verschiedenen Bildpositionen vorhandener lokaler Intensitätsmaxima (15) größer oder gleich einer vorbestimmten Anzahl ist, wobei die Anzahl mindestens Zwei beträgt,
wobei
a. ein räumlicher Abstand der lokalen Intensitätsmaxima (15) untereinander oder zu einem Referenzelement bestimmbar ist, wobei das Sicherheitselement verifizierbar ist, falls alle oder ein vorbestimmter Anteil der Abstände kleiner als ein vorbestimmter Minimalabstand oder größer als ein vorbestimmter Maximalabstand sind und/oder
b. eine räumliche Größe der lokalen Intensitätsmaxima (15) bestimmbar ist, wobei die Größe einer Anzahl von zusammenhängenden Bildpunkten, die das lokale Intensitätsmaximum (15) bilden, entspricht, wobei das Sicherheitselement verifizierbar ist, wenn alle Größen größer als eine Minimalgröße und kleiner als eine Maximalgröße sind, und/oder
c. mindestens eine lumineszenzspezifische Eigenschaft der zur Erzeugung des Abbilds erfassten Lumineszenzstrahlung bestimmbar ist, wobei das Sicherheitselement verifizierbar ist, falls die luminszenzspezifische Eigenschaft erfüllt ist, wobei die lumineszenzspezifische Eigenschaft eine Frequenz eines zeitlichen Intensitätsverlaufs der Lumineszenzstrahlung oder ein Abklingverhalten der Maximalintensität der Lumineszenzstrahlung ist.

9. Vorrichtung nach Anspruch 8, **dadurch gekennzeichnet, dass** die Vorrichtung (1) zusätzlich mindestens eine erste Lichtquelle (8) umfasst, wobei die erste Lichtquelle (8) derart angeordnet und ausgebildet ist, dass ein erster Teilbereich mit Strahlung unter einem ersten Einstrahlwinkel beleuchtbar ist und ein zweiter Teilbereich mit Strahlung unter einem zweiten Einstrahlwinkel beleuchtbar ist oder die Vorrichtung (1) zusätzlich mindestens eine zweite Lichtquelle (9) umfasst, wobei die zweite Lichtquelle (9) derart angeordnet und ausgebildet ist, dass der erste Teilbereich oder der zweite Teilbereich mit Strahlung unter dem zweiten Einstrahlwinkel beleuchtbar ist.

## Claims

1. A method for checking a security element of a security document (6), the security element containing at least one particulate substance with electroluminescent properties and at least one field displacement element, comprising the following method steps:
- exposing the security element to an electrical excitation field,
- generating an optical image (16) of at least one region of the security element after or during the generation of the electrical excitation field,
**characterized by** the method steps:
- detecting local intensity maxima (15) in the optical image (16),
- verifying the security element if a number of local intensity maxima (15) present at different image positions is greater than or equal to a predetermined number, the number being at least two,
wherein
a. a spatial distance of the local intensity maxima (15) from one another or from a reference element is determined, the security element being verified if all or a predetermined proportion of the distances are less than a predetermined minimum distance or greater than a predetermined maximum distance, and/or
b. a spatial quantity of the local intensity maxima (15) is determined, the quantity corresponding to a number of contiguous pixels forming the local intensity maximum (15), the security element being verified if all quantities are greater than a minimum quantity and less than a maximum quantity and/or
c. at least one luminescence-specific property of the luminescence radiation detected for generating the image is determined, the security element being verified if the luminescence-specific property is satisfied, the luminescence-specific property being a frequency of a temporal intensity curve of the luminescence radiation or a decay behavior of the maximum intensity of the luminescence radiation.

2. The method according to claim 1, **characterized in that** an intensity value of at least one local intensity maximum (15) is determined, the security element being verified if at least one predetermined intensity condition is satisfied.

3. The method according to claim 1 or 2, **characterized in that** a total intensity of the radiation that is detected during the generation of the optical image (16) is determined, the security element being verified if the total intensity is less than or greater than a predetermined intensity value or lies within a predetermined intensity interval.

4. The method according to one of the claims 1 to 3, **characterized in that** at least one first portion of the security element is additionally illuminated with white-light radiation at a first angle of incidence and with white-light radiation at a second angle of incidence, wherein radiation that is reflected from the first portion is detected, wherein color tones of the reflected radiation are determined, and wherein the security element is verified if two wavelength- and angle-specific color tones are detected, or that at least one first portion of the security element is additionally illuminated with white-light radiation at a first angle of incidence and a second portion is additionally illuminated with white-light radiation at a second angle of incidence, wherein radiation that is reflected from the first and from the second portion is detected, wherein a color tone of the radiation that is reflected from the first portion and a color tone of the radiation that is reflected from the second portion are determined, and wherein the security element is verified if the color tone of the radiation that is reflected from the first portion corresponds to a color tone that is specified by the first wavelength and the first angle of incidence and the color tone of the radiation that is reflected from the second portion corresponds to a color tone that is specified by the second wavelength and the second angle of incidence.

5. The method according to one of the claims 1 to 3, **characterized in that** at least one first portion of the security element is additionally illuminated with a first radiation at a first angle of incidence and with a further radiation at a second angle of incidence, wherein the first radiation has a first wavelength or a first spectral range, wherein the further radiation has another wavelength or another spectral range, wherein radiation that is reflected from the first portion is detected, wherein intensities of the reflected radiation are determined, and wherein the security element is verified if an intensity is greater than a predetermined intensity, or that at least one first portion of the security element is additionally illuminated with a first radiation at a first angle of incidence and a second portion is additionally illuminated with further radiation at a second angle of incidence, wherein radiation that is reflected from the first and from the second portion is detected, wherein an intensity of the radiation that is reflected from the first portion and an intensity of the radiation that is reflected from the second portion are determined, and wherein the security element is verified if the intensity of the radiation that is reflected from the first portion is greater than a predetermined intensity and the intensity of the radiation that is reflected from the second portion is greater than a predetermined intensity.

6. The method according to claim 4 or 5, **characterized in that** the illumination with the white-light radiation or the radiation having a first wavelength and the radiation having a second wavelength takes place with a time delay relative an exposure to the electrical excitation field.

7. The method according to claim 6, **characterized in that** the illumination with the white-light radiation or the radiation having a first wavelength and a second wavelength takes place if a voltage of the electrical excitation field is less than a predetermined threshold value.

8. A device for checking a security element of a security document (6), wherein the device (1) is configured so as to carry out a method according to one of the preceding claims and comprises at least one apparatus for generating an electrical excitation field, at least one apparatus for image capture, and at least one evaluation apparatus (4),
wherein an electrical excitation field can be generated by means of the apparatus for generating an electrical excitation field to which the security element is exposed, and wherein an optical image (16) of at least one region of the security element can be generated by means of the apparatus for image capture after or during the generation of the electrical excitation field,
**characterized in that**
local intensity maxima (15) in the optical image (16) can be detected by means of the evaluation apparatus (4), the security element being verifiable by means of the evaluation apparatus (4) if a number of local intensity maxima (15) that are present at different image positions is greater than or equal to a predetermined number, the number being at least two, wherein
a. a spatial distance of the local intensity maxima (15) from one another or from a reference element can be determined, the security element being verifiable if all or a predetermined proportion of the distances are less than a predetermined minimum distance or greater than a predetermined maximum distance, and/or
b. a spatial quantity of the local intensity maxima (15) can be determined, the quantity corresponding to a number of contiguous pixels forming the local intensity maximum (15), the security element being verifiable if all quantities are greater than a minimum quantity and less than a maximum quantity, and/or
c. at least one luminescence-specific property of the luminescence radiation detected for generating the image can be determined, the security element being verifiable if the luminescence-specific property is satisfied, the luminescence-specific property being a frequency of a temporal intensity curve of the luminescence radiation or a decay behavior of the maximum intensity of the luminescence radiation.

9. The device according to claim 8, **characterized in that** the device (1) additionally comprises at least one first light source (8), the first light source (8) being arranged and formed in such a way that a first portion can be illuminated with radiation at a first angle of incidence and a second portion can be illuminated with radiation at a second angle of incidence, or the device (1) additionally comprises at least one second light source (9), the second light source (9) being arranged and formed in such a way that the first portion or the second portion can be illuminated with radiation at the second angle of incidence.

## Revendications

1. Procédé de vérification d'un élément de sécurité d'un document sécurisé (6), dans lequel l'élément de sécurité comprend au moins une substance particulaire avec des propriétés électroluminescentes et au moins un élément de déplacement de champ, comprenant les étapes de procédé suivantes :
- Sollicitation de l'élément de sécurité par un champ d'excitation électrique,
- Création d'une image optique (16) d'au moins une zone de l'élément de sécurité après ou pendant la création du champ d'excitation électrique,
**caractérisé par** les étapes de procédé suivantes :
- Détection de maxima locaux d'intensité (15) dans l'image optique (16),
- Vérification de l'élément de sécurité si un nombre de maxima locaux d'intensité présents (15) à positions différentes dans l'image est supérieur ou égal à un nombre prédéterminé, le nombre était au moins égal à deux,
où
a. on détermine une distance spatiale des maxima locaux d'intensité (15) entre eux ou à un élément de référence, où l'on vérifie l'élément de sécurité si toutes ou une proportion prédéterminée des distances sont inférieures à une distance minimale prédéterminée ou supérieures à une distance maximale prédéterminée, et/ou
b. on détermine une dimension spatiale des maxima locaux d'intensité (15), où la dimension correspond à un certain nombre de points de l'image liés les uns aux autres qui forment le maximum local d'intensité (15), où l'on vérifie l'élément de sécurité si toutes les dimensions sont supérieures à une dimension minimale et inférieures à une dimension maximale, et/ou
c. on détermine au moins une propriété spécifique de luminescence du rayonnement de luminescence détecté pour créer l'image, où l'on vérifie l'élément de sécurité si la propriété spécifique de luminescence est satisfaite, la propriété spécifique de luminescence étant une fréquence sur une courbe d'intensité dans le temps du rayonnement de luminescence ou un comportement de décroissance de l'intensité maximale du rayonnement de luminescence.

2. Procédé selon la revendication 1, **caractérisé en ce qu'**on détermine une valeur d'intensité d'au moins un maximum local d'intensité (15), où l'on vérifie l'élément de sécurité si au moins une condition d'intensité prédéterminée est satisfaite.

3. Procédé selon l'une quelconque des revendications 1 ou 2, **caractérisé en ce qu'**on détermine une intensité totale du rayonnement détecté lors de la création de l'image optique (16), où l'on vérifie l'élément de sécurité si l'intensité totale est inférieure ou supérieure à une valeur d'intensité prédéterminée ou se situe dans un intervalle d'intensité prédéterminé.

4. Procédé selon l'une quelconque des revendications 1 à 3, **caractérisé en ce qu'**au moins une première zone partielle de l'élément de sécurité est éclairée en plus par un rayonnement de lumière blanche sous un premier angle d'incidence et par un rayonnement de lumière blanche sous un second angle d'incidence, où un rayonnement réfléchi par la première zone partielle est détecté, où l'on détermine des coloris du rayonnement réfléchi, où l'on vérifie l'élément de sécurité si deux coloris spécifiques en longueur d'onde et en angle sont détectés, ou **en ce qu'**au moins une première zone partielle de l'élément de sécurité est éclairée en plus par un rayonnement de lumière blanche sous un premier angle d'incidence et une seconde zone partielle est éclairée en plus par un rayonnement de lumière blanche sous un second angle d'incidence, où un rayonnement réfléchi par la première zone partielle et par la seconde zone partielle est détecté, où l'on détermine un coloris du rayonnement réfléchi par la première zone partielle et un coloris du rayonnement réfléchi par la seconde zone partielle, où l'on vérifie l'élément de sécurité si le coloris du rayonnement réfléchi par la première zone partielle correspond à un coloris spécifié par la première longueur d'onde et le premier angle d'incidence et si le coloris du rayonnement réfléchi par la seconde zone partielle correspond à un coloris spécifié par la seconde longueur d'onde et le second angle d'incidence.

5. Procédé selon l'une quelconque des revendications 1 à 3, **caractérisé en ce qu'**au moins une première zone partielle de l'élément de sécurité est éclairée en plus par un premier rayonnement sous un premier angle d'incidence et par un autre rayonnement sous un second angle d'incidence, où le premier rayonnement présente une première longueur d'onde ou une première gamme de longueurs d'onde, le second rayonnement présentant une seconde longueur d'onde ou une seconde gamme de longueurs d'onde, où le rayonnement réfléchi par la première zone partielle est détecté, où l'on détermine des intensités du rayonnement réfléchi, où l'on vérifie l'élément de sécurité si une intensité est supérieure à une intensité prédéterminée, ou **en ce qu'**au moins une première zone partielle de l'élément de sécurité est éclairée en plus par un premier rayonnement sous un premier angle d'incidence et **en ce qu'**une seconde zone partielle de l'élément de sécurité est éclairée en plus par un second rayonnement sous un second angle d'incidence, où un rayonnement réfléchi par la première zone partielle et par la seconde zone partielle est détecté, où l'on détermine une intensité du rayonnement réfléchi par la première zone partielle et une intensité du rayonnement réfléchi par la première zone partielle, où l'on vérifie l'élément de sécurité si l'intensité du rayonnement réfléchi par la première zone partielle est supérieure à une intensité prédéterminée et si l'intensité du rayonnement réfléchi par la seconde zone partielle est supérieure à une intensité prédéterminée.

6. Procédé selon l'une quelconque des revendications 4 ou 5, **caractérisé en ce que** l'éclairage par la lumière blanche ou par le rayonnement d'une première longueur d'onde et par le rayonnement d'une seconde longueur d'onde est effectué en décalage temporel par rapport à une sollicitation par le champ d'excitation électrique.

7. Procédé selon la revendication 6, **caractérisé en ce que** l'éclairage par la lumière blanche ou par le rayonnement d'une première longueur d'onde et d'une seconde longueur d'onde est effectué si une tension du champ d'excitation électrique est inférieur à une valeur seuil prédéterminée.

8. Dispositif de vérification d'un élément de sécurité d'un document sécurisé (6), le dispositif (1) étant conçu pour réaliser un procédé selon l'une des revendications précédentes et comprend au moins un dispositif de création d'un champ d'excitation électrique, au moins un dispositif de détection d'image et au moins un dispositif de dépouillement (4), où un champ d'excitation électrique peut être généré au moyen d'un dispositif de création d'un champ d'excitation électrique, avec lequel l'élément de sécurité est sollicité, où une image optique (16) d'au moins une zone de l'élément de sécurité peut être créée après ou pendant la création du champ d'excitation électrique au moyen du dispositif de détection d'image, **caractérisé en ce que** des maxima locaux d'intensité (15) dans l'image optique (16) sont détectables au moyen du dispositif de dépouillement (4), où l'on peut vérifier l'élément de sécurité au moyen du dispositif de dépouillement (4) si un nombre de maxima locaux d'intensité présents (15) à positions différentes dans l'image est supérieur ou égal à un nombre prédéterminé, le nombre était au moins égal à deux.
où
a. on peut déterminer une distance spatiale des maxima locaux d'intensité (15) entre eux ou à un élément de référence, où l'on peut vérifier l'élément de sécurité si toutes ou une proportion prédéterminée des distances sont inférieures à une distance minimale prédéterminée ou supérieures à une distance maximale prédéterminée, et/ou
b. on peut déterminer une dimension spatiale des maxima locaux d'intensité (15), où la dimension correspond à un certain nombre de points de l'image liés les uns aux autres qui forment le maximum local d'intensité (15), où l'on peut vérifier l'élément de sécurité si toutes les dimensions sont supérieures à une dimension minimale et inférieures à une dimension maximale, et/ou
c. on peut déterminer au moins une propriété spécifique de luminescence du rayonnement de luminescence détecté pour créer l'image, où l'on peut vérifier l'élément de sécurité si la propriété spécifique de luminescence est satisfaite, la propriété spécifique de luminescence étant une fréquence sur une courbe d'intensité dans le temps du rayonnement de luminescence ou un comportement de décroissance de l'intensité maximale du rayonnement de luminescence.

9. Dispositif selon la revendication 8, **caractérisé en ce que** le dispositif (1) comprend en plus au moins une première source lumineuse (8), la première source lumineuse (8) étant disposée et mise en capacité de sorte qu'une première zone partielle puisse être éclairée par un rayonnement sous un premier angle d'incidence et une seconde zone partielle puisse être éclairée par un rayonnement sous un second angle d'incidence, ou **en ce que** le dispositif (1) comprend en plus au moins une seconde source lumineuse (9), la seconde source lumineuse (9) étant disposée et mise en capacité de sorte que la première zone partielle ou la seconde zone partielle puisse être éclairée par un rayonnement sous un second angle d'incidence.
